# EUROPÄISCHE PATENTSCHRIFT

(11) **EP 0 541 947 B1**
(45) Veröffentlichungstag und Bekanntmachung des Hinweises auf die Patenterteilung: **13.12.1995**
(21) Anmeldenummer: 92116796.1
(22) Anmeldetag: 01.10.1992
(51) Int. Cl.: F24D 3/16, F24F 5/00

(54) **Wärmetauscher**
Heat exchanger
Echangeur de chaleur

(30) Priorität: 11.11.1991 DE 4136933
(43) Veröffentlichungstag der Anmeldung: 19.05.1993
(73) Patentinhaber: Hewing GmbH, D-48607 Ochtrup (DE)
(72) Erfinder: Homm, Karl-Georg, D-4730 Marl-Polsum (DE)
(74) Vertreter: Hilleringmann, Jochen, Dipl.-Ing.

(56) Entgegenhaltungen:
- EP-A- 0 249 919
- CH-A- 609 142
- FR-A- 2 665 515

## Beschreibung

Die Erfindung betrifft einen Wärmetauscher zur Beeinflussung des Raumklimas nach dem Oberbegriff des Anspruchs 1.

Bei einem bekannten, einen Sonnenschutz bildenden Wärmetauscher dieser Art (CH-A-609 142) sind die Lamellen als Metall-Hohlprofile ausgebildet, in dessen Innenraum gerade Rohre freistehend in der Längsmittelebene angeordnet sind, die von einem Medium durchflossen sind, das durch direkte und indirekte Sonnenstrahlung erwärmt wird, um eine wirtschaftliche Ausnutzung der von der Lamelle aufgenommenen Sonnenenergie zu erreichen.

Der Erfindung liegt die Aufgabe zugrunde, einen Wärmetauscher zur Beeinflussung des Raumklimas der angegebenen Art zu schaffen, dessen Bauform einen wirksamen Wärmeaustausch ermöglicht und mit geringem Aufwand als nachrüstbares Kühl- und/oder Heizsystem einsetzbar ist.

Ausgehend von einem Wärmetauscher nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 9 verwiesen.

Mit der erfindungsgemäßen Ausgestaltung des Wärmetauschers, der in die Lamellen einer Jalousie integriert ist, kann mittels der in den Lamellen beliebig verlegbaren Kapillarrohrschleifen mit geringem Aufwand ein an unterschiedliche Raumbedingungen anpaßbares Raumklima erzielt werden, wobei eine Anordnung bzw. Ausbildung sowohl als gleichzeitig die Sonneneinstrahlung regulierende Jalousie im Fensterbereich eines Raumes als auch als optischer Raumteiler oder als Wandbehang möglich ist. Über die Einstellung der Lamellen sind dabei unterschiedliche Strömungsverhältnisse der für den Wärmeaustausch maßgeblichen Umluft erreichbar, wobei ein schneller Austausch auch durch die Größe der von den Kapillarrohrschleifen gebildeten Wärmetauscherflächen, die Verlegedichte der Kapillarrohrschleifen und der Anzahl und Dichte der Lamellen bestimmt ist.

Mit den allseitig umströmten Lamellen, die zweckmäßig eine Vertikaljalousie bilden, ist eine schnelle Energieumsetzung möglich, so daß sich der Einsatz eines derartigen Wärmetauschers als zusätzliches, im Bedarfsfall schnell verfügbares und nachträglich einfach installierbares Heiz- oder Kühlelement anbietet, das beispielsweise mit separat sperr- und freigebbaren Vor- bzw. Rücklaufrohren mit geringem Aufwand in ein vorhandendes Heiz- bzw. Kühlsystem integrierbar ist.

Weitere Einzelheiten und Vorteile der Erfindung ergeben sich aus der nachfolgenden Beschreibung und der Zeichnung, die ein Ausführungsbeispiel eines erfindungsgemäßen Wärmetauschers schematisch veranschaulicht. In der Zeichnung zeigen:
- Fig. 1: eine teilweise geschnittene Prinzipdarstellung eines erfindungsgemäßen Wärmetauschers als Bestandteil einer Vertikaljalousie,
- Fig. 2: eine ausschnittsweise Einzeldarstellung von Lamellen einer Vertikaljalousie ähnlich Fig. 1 in Schließstellung,
- Fig. 3: eine teilweise geschnittene Prinzipdarstellung des Wärmetauschers ähnlich Fig. 1 mit einem veränderten Verlegekanal und
- Fig. 4: eine teilweise geschnittene Prinzipdarstellung des erfindungsgemäßen Wärmetauschers mit Kapillarrohrschleifen in gestreckter Einbaulage.

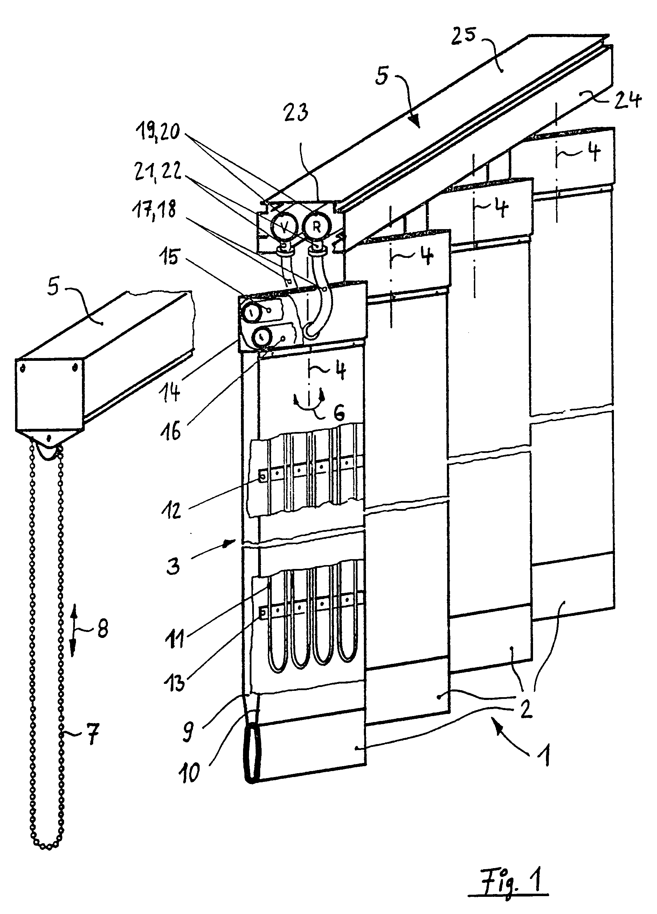

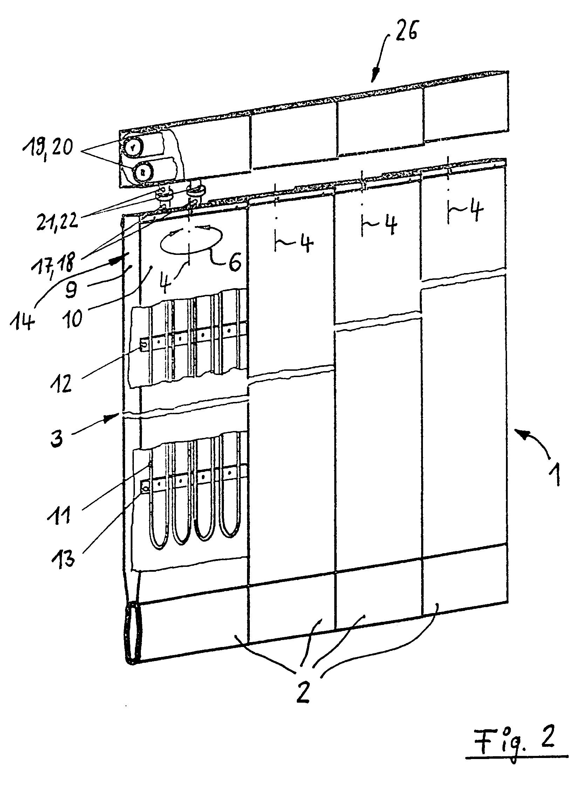

In Fig. 1 ist in einer schematischen Perspektivdarstellung eine für eine Vertikaljalousie 1 typische Anordnung von mehreren Lamellen 2 dargestellt, wovon zumindest eine als Wärmetauscher 3 ausgebildet ist. Die Lamellen 2 sind dabei um eine senkrechte Achse 4 schwenkbar im Bereich eines oberen Verlegekanals 5 festgelegt, in dem ein Antriebsmechanismus (nicht dargestellt) angeordnet ist, der eine Schwenkbewegung der Lamellen 2 in einer Schwenkrichtung 6 (Fig. 2) über eine Bewegung eines Zugseiles 7 in Pfeilrichtung 8 ermöglicht.

Die als Wärmetauscher 3 ausgebildeten Lamellen 2 sind in zweckmäßiger Ausführungsform von zwei Deckschichten 9,10 gebildet, zwischen denen Kapillarrohrschleifen 11 angeordnet sind. Damit ist eine gute Energieumsetzung zwischen dem Wärmetauscher 3 und der diesen umgebenden Umluft erreichbar.

In bevorzugter Ausrührungsform sind die Kapillarrohrschleifen 11 zwischen den Deckschichten 9, 10 durch eine oder mehrere Clip-Schienen 12, 13 in ihrer Einbaulage gehalten. Ebenso ist es möglich, die Kapillarrohrschleifen 11 beispielsweise über eine Klebverbindung an zumindest einer der Deckschichten 9, 10 festzulegen oder die freihängenden Kapillarrohrschleifen 11 über eine entsprechend straffe gegenseitige Verspannung der Deckschichten 9, 10 zu fixieren.

Bei Anwendung von Kapillarrohren 11 mit hinreichend geringem Außendurchmesser können die Kapillarrohrschleifen 11 auch als unmittelbarer Bestandteil der Lamellen 2 in eine oder beide der Deckschichten 9,10 eingewebt sein (nicht dargestellt).

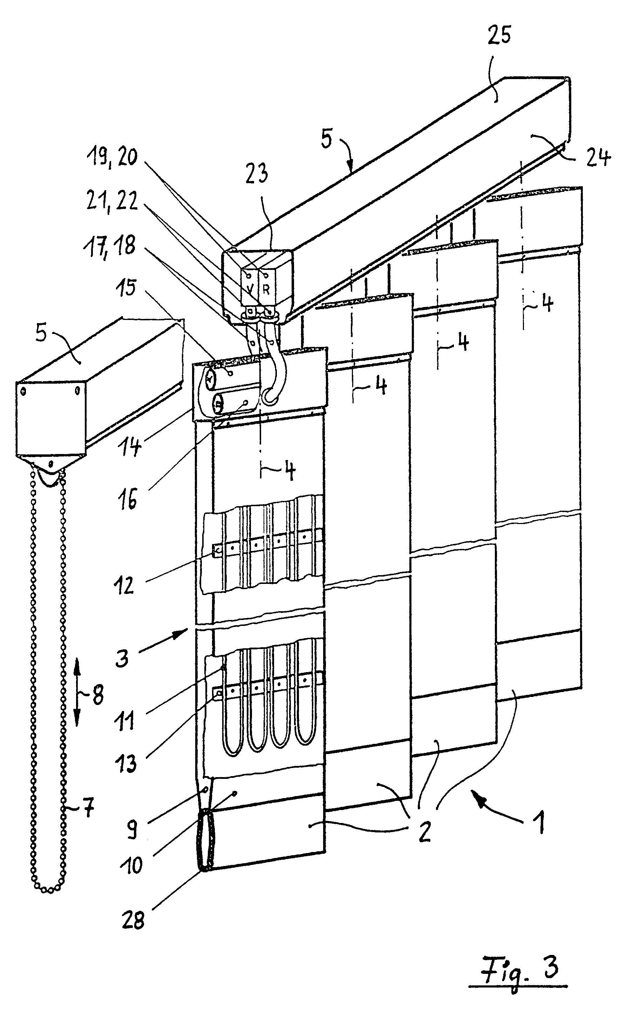

Die teilweise geschnittenen Darstellungen gemäß Fig. 1 und Fig. 3 verdeutlichen, daß die Kapillarrohrschleifen 11 in einem oberen Bereich 14 der Lamellen 2 in jeweilige Sammelrohre 15, 16 münden, die über vorzugsweise als Schlauchabschnitt 17, 18 ausgebildete Verbindungen mit jeweils einem, eine Zu- bzw. Ableitung des Strömungsmediums zu externen Versorgungsleitungen (nicht dargestellt) bildenden Vorlaufrohr 19 bzw. Rücklaufrohr 20 verbunden sind. Die Sammelrohre 15, 16 sind dabei derart in den oberen Bereich 14 der jeweiligen Lamelle 2 integriert, daß der optische Gesamteindruck der Vertikaljalousie 1 weitgehend unbeeinflußt bleibt.

Die flexiblen schlauchabschnitte 17, 18 münden in bevorzugter Ausführung mittig in die als endseitig geschlossene Rohrabschnitte ausgebildeten Sammelrohre 15, 16, so daß beim Schwenken der Lamellen 2 in Schwenkrichtung 6 im Bereich der Schlauchabschnitte 17, 18 nur minimale Drehmomente erzeugt werden, die über die Flexibilität der Schlauchabschnitte 17, 18 aufnehmbar sind und im Bereich von Steckübergängen 21, 22 keine die Dichtigkeit beeinflussende Überbelastungen erzeugen.

In der Ausführungsform gemäß Fig. 2 ragen die Schlauchabschnitte 17, 18 zwischen den Deckschichten 9,10 hindurch in den Zwischenraum, so daß eine einfache Bauform dadurch erreicht ist, daß die Schlauchabschnitte 17, 18 die Deckschichten 9, 10 nicht mehr durchdringen. Dabei sind gleichzeitig die Steckübergänge 21, 22 so ausgebildet, daß die mit der Pfeilrichtung 6 angegebene Schwenkbewegung der Lamellen 2 weiterhin möglich ist, wozu beispielsweise als Verbindungsglied zum Vorlaufrohr 19 bzw. Rücklaufrohr 20 im Bereich der Steckübergänge 21, 22 jeweils ein T-Stück (nicht dargestellt) vorgesehen sein kann, über das die Lamelle 2 schwenkbeweglich abgestützt ist.

In der Ausführungsform gemäß Fig. 1 und Fig. 3 sind das Vorlaufrohr 19 und das Rücklaufrohr 20 gemeinsam in dem oberen Verlegekanal 5 angeordnet, der in seiner Querschnittsform 23 an unterschiedliche Größen und Formen des Vor- bzw. Rücklaufrohres 19,20 anpaßbar ist. Dabei kann die Querschnittsform 23 beispielsweise von einem einstückigen U-Profil (Fig. 3) mit einem als Tragplatte 25 ausgebildeten Steg und zwei als Frontplatte 24 in der Einbaulage sichtbaren Schenkeln versehen sein. Stattdessen kann in der Ausführung gemäß Fig. 1 zumindest eine profilierte Frontplatte 24 vorgesehen sein, die mit der an der Decke zu befestigenden Tragplatte 25 verschweißt oder verklebt ist und über innere Stützstege das Vorlaufrohr 19 und das Rücklaufrohr 20 festlegt.

In der Ausführungsform gemäß Fig. 2 ist ein konstruktiv vereinfachter Aufbau der Vertikaljalousie 1 dadurch erreicht, daß ein oberer Verlegekanal 26 für die Vor- und Rücklaufrohre 19,20 unmittelbar in dem Zwischenraum der die Lamellen 2 bildenden Deckschichten 9,10 integriert ist. Mit entsprechend dimensionierten Vor- und Rücklaufrohren 19, 20 ist damit der obere Verlegekanal 26 auf minimalen Raumbedarf zu reduzieren, so daß auch bei beengten Platzverhältnissen ein Einbau der Vertikaljalousie 1 möglich ist. Über eine entsprechende flexible Ausbildung des Vorlauf- bzw. Rücklaufrohres 19,20 kann der Bereich des Verlegekanals 26 ebenfalls schwenkbar sein. Damit ist eine Ausbildung des Wärmetauschers 1 veranschaulicht, die mit geringem Aufwand eine Nachrüstung im Bereich vorhandener Fensteröffnungen ermöglicht.

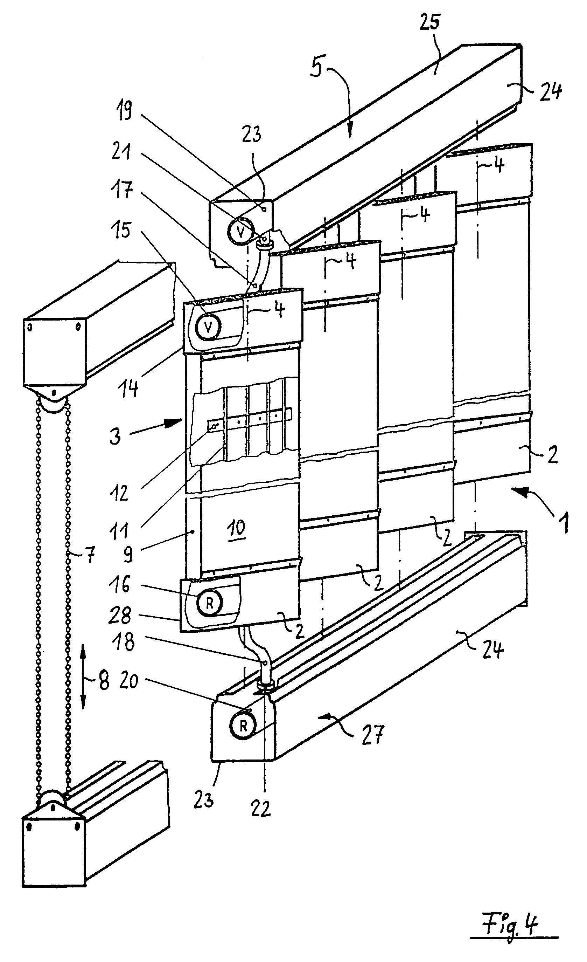

In einer weiteren Ausführungsform des Wärmetauschers 1 gemäß Fig. 4 sind das Vorlaufrohr 19 und das Rücklaufrohr 20 in dem oberen Verlegekanal 5 bzw. einem unteren Verlegekanal 27 getrennt voneinander angeordnet, wobei die Kapillarrohrschleifen 11 eine insgesamt gestreckte Einbaulage aufweisen und auch in dieser Ausführung als Kapillarrohrschleifen bezeichnet sein sollen. Die Sammelrohre 15,16 sind dabei ebenfalls getrennt voneinander in den Lamellen 2 im oberen Bereich 24 bzw. in einem unteren Bereich 28 angeordnet.

Damit ist insgesamt eine Vertikaljalousie 1 mit Wärmetauscher(n) 3 gebildet, deren Verstellbarkeit besonders einfach ist und deren Lamellen 2 nur in einer Hauptströmungsrichtung durchströmt sind.

## Patentansprüche

1. Wärmetauscher zur Beeinflussung des Raumklimas, mit einem mediumdurchströmten Leitungssystem mit zumindest einem Vorlaufrohr (19), einem Rücklaufrohr (20) und einer von rohrförmigen Kanälen gebildeten Wärmetauscherfläche, die Lamellen (2) einer Vertikaljalousie (1) zugeordnet ist, **dadurch gekennzeichnet,** daß die Kanäle als Kapillarrohrschleifen (11) ausgebildet und an zumindest einer Deckschicht (9,10) der Lamelle (2) festgelegt sind.

2. Wärmetauscher nach Anspruch 1, dadurch gekennzeichnet, daß Kapillarrohrschleifen (11) in zumindest eine Deckschicht (9,10) der Lamelle (2) eingewebt sind.

3. Warmetauscher nach Anspruch 1, dadurch gekennzeichnet, daß die Kapillarrohrschleifen (11) mit zumindest einer Deckschicht (9,10) der Lamelle (2) verklebt sind.

4. Wärmetauscher nach Anspruch 1, dadurch gekennzeichnet, daß die Kapillarrohrschleifen (11) zwischen zwei Deckschichten (9,10) angeordnet und durch eine oder mehrere Clip-Schienen in ihrer Einbaulage gehalten sind.

5. Wärmetauscher nach Anspruch 1, dadurch gekennzeichnet, daß die Kapillarrohrschleifen (11) zwischen zwei Deckschichten (9,10) durch deren gegenseitige Verspannung fixiert sind.

6. Wärmetauscher nach einem der Ansprüche 1 bis 5, dadurch gekennzeichnet, daß die Kapillarrohrschleifen (11) an Sammelrohre (15,16) in Form endseitig geschlossener Rohrabschnitte angeschlossen sind, in die mittig flexible Schlauchabschnitte (17,18) als Verbindung zum Vorlaufrohr (19) und Rücklaufrohr (20) einmünden.

7. Wärmetauscher nach einem der Ansprüche 1 bis 6, dadurch gekennzeichnet, daß das Vorlaufrohr (19) und das Rücklaufrohr (20) gemeinsam in einem oberen verlegekanal (5;26) angeordnet sind.

8. Wärmetauscher nach Anspruch 6 und 7, dadurch gekennzeichnet, daß die Sammelrohre (15,16) im oberen Bereich (14) der Lamellen (2) angeordnet sind.

9. Wärmetauscher nach einem der Ansprüche 6 bis 8, dadurch gekennzeichnet, daß die flexiblen Schlauchabschnitte (17,18) jeweils über Steckübergänge (21,22) an das Vorlaufrohr (19) und Rücklaufrohr (20) und/oder an die Sammelrohre (15,16) angeschlossen sind.

## Claims

1. A heat exchanger for influencing room climate, with a piping system through which medium flows and which comprises at least one main flow pipe (19), a return flow pipe (20) and, formed by tubular passages, a heat exchanger area which is associated with the louvres (2) of a vertical blind (1), characterized in that the passages are constructed as capillary tube loops (11) and are fixed to at least one top layer (9, 10) of the louvre (2).

2. A heat exchanger according to claim 1, characterized in that capillary tube loops (11) are woven into at least one top layer (9, 10) of the louvre (2).

3. A heat exchanger according to claim 1, characterized in that the capillary tube loops (11) are glued to at least one top layer (9, 10) of the louvre (2).

4. A heat exchanger according to claim 1, characterized in that the capillary tube loops (11) are disposed between two top layers (9, 10) and are held in their installed position by one or a plurality of clip rails.

5. A heat exchanger according to claim 1, characterized in that the capillary tube loops (11) are fixed between two top layers (9, 10) by the latter being clamped against each other.

6. A heat exchanger according to one of claims 1 to 5, characterized in that the capillary tube loops (11) are connected to header pipes (15, 16) in the form of closed-end tube portions into which flexible hose portions (17, 18) open centrally as a connection between the main flow pipe (19) and return flow pipe (20).

7. A heat exchanger according to one of claims 1 to 6, characterised in that the main flow pipe (19) and the return flow pipe (20) are jointly disposed in an upper installation channel (5, 26).

8. A heat exchanger according to claim 6 and 7, characterised in that the header pipes (15, 126) are disposed in the upper part (14) of the louvres (2).

9. A heat exchanger according to one of claims 6to 8. characterised in that the flexible hose Portions (17, 18) are in each case connected by push-in transfer means (21, 22) to the main flow pipe (19) and return flow pipe (20) and/or to the header pipes (15, 16).

## Revendications

1. Echangeur de chaleur destiné à influencer l'atmosphère d'un local, avec un système de conduites parcouru par un fluide, comprenant au moins une conduite d'amenée (19), une conduite de retour (20) et une surface d'échange de chaleur formée de conduits tubulaires, qui est affectée à des lamelles (2) d'une jalousie verticale (1), caractérisé en ce que les conduits sont formés comme des boucles (11) de tubes capillaires et sont fixés à au moins une couche de parement (9, 10) de la lamelle (2).

2. Echangeur de chaleur suivant la revendication 1, caractérisé en ce que les boucles (11) de tubes capillaires sont incorporées par entrelacement dans au moins une couche de parement (9, 10) de la lamelle (2).

3. Echangeur de chaleur suivant la revendication 1, caractérisé en ce que les boucles (11) de tubes capillaires sont collées à au moins une couche de parement (9, 10) de la lamelle (2).

4. Echangeur de chaleur suivant la revendication 1, caractérisé en ce que les boucles (11) de tubes capillaires sont disposées entre deux couches de parement (9, 10) et sont maintenues dans leur position de montage par une ou plusieurs barrettes de clipsage.

5. Echangeur de chaleur suivant la revendication 1, caractérisé en ce que les boucles (11) de tubes capillaires sont fixées entre deux couches de parement (9, 10) par l'assujettissement réciproque de celles-ci.

6. Echangeur de chaleur suivant l'une quelconque des revendications 1 à 5, caractérisé en que les boucles (11) de tubes capillaires sont raccordées à des collecteurs (15, 16) se présentant sous la forme de sections de tuyaux fermées aux extrémités, dans lesquelles débouchent, au milieu, des sections de tuyaux flexibles (17, 18) servant de raccordements à la conduite d'amenée (19) et à la conduite de retour (20).

7. Echangeur de chaleur suivant l'une quelconque des revendications 1 à 6, caractérisé en ce que la conduite d'amenée (19) et la conduite de retour (20) sont disposées ensemble dans un caisson de montage supérieur (5; 26).

8. Echangeur de chaleur suivant les revendications 6 et 7, caractérisé en ce que les collecteurs (15, 16) sont disposés dans la zone supérieure (14) des lamelles (2).

9. Echangeur de chaleur suivant l'une quelconque des revendications 6 à 8, caractérisé en ce que les sections de tuyaux flexibles (17, 18) sont chacune raccordée par l'intermédiaire d'embouts de raccordement (21, 22) à la conduite d'amenée (19) et à la conduite de retour (20) et/ou aux collecteurs (15, 16).
